# EUROPEAN PATENT APPLICATION

(11) **EP 0 656 392 A1**
(43) Date of publication of application: **07.06.1995**
(21) Application number: 94203232.7
(22) Date of filing: 05.11.1994
(51) Int. Cl.: C08L 23/02, C08K 3/26, C08K 9/08

(54) **Reinforced thermoplastic polyolefin composition**

(30) Priority: 19.11.1993 IT MI932458
(71) Applicant: ENIRICERCHE S.p.A., I-20097 S. Donato Milanese (Milano) (IT); ENICHEM S.p.A., I-20124 Milano (IT)
(72) Inventor: Carraro, Claudio, I-30035 Mirano (Venezia) (IT); Moro, Alessandro, I-30030 Cazzago di Pianiga (Venezia) (IT); Pippa, Roberto, I-30033 Noale (Venezia) (IT); Scapin, Marco, I-30031 Dolo (Venezia) (IT); Venti, Paolo, I-35020 Padova (IT)
(74) Representative: Fusina, Gerolamo

(57) **Abstract**

Reinforced thermoplastic polyolefin composition having an excellent balance of mechanical, physical, thermal and rheological properties, comprising:
(A) a polyolefin
(B) at least one carbonate of a metal of Group IIA of the Periodic Table, and
(C) a phenolic resin containing at least one hydroxyl group or halogen atom.

## Description

The present invention relates to reinforced thermoplastic polyolefin compositions.

More specifically the present invention relates to reinforced thermoplastic polyolefin compositions having improved rheological properties and suitable for the production of moulded articles having mechanical resilience properties, especially at temperatures lower than 0°C, which are much higher than those of corresponding non-reinforced polyolefin compositions.

It is known that polyolefins are used in a wide range of applications which comprise films, fibres, moulded or thermoformed articles, pipes, linings etc. In some of these applications, especially in the production of articles formed by moulding, the product to be moulded must have properties of rigidity and/or shock resistance which are higher than those of the starting polyolefin.

Many techniques for modifying the properties of polyolefins are known and described in literature; these comprise cross-linking of the polymer or the incorporation of additives, for example elastomers, or fillers, for example glass fibres, kaolin, mica, oxides, carbonates of metals of the second or third group of the Periodic Table, etc., in the polymeric matrix. Reinforced polyolefinic compositions with loads generally tend to have a higher rigidity with respect to that of the simple starting polymer as well as an improved dimensional stability of the end-products.

It is known, however, that polyolefins, owing to their apolar nature, are not suited to being reinforced with fillers or inorganic additives; in fact, the increase in rigidity and dimensional stability is usually accompanied by a lowering of other properties such as impact strength, resilience, etc.

To avoid this drawback proposals have made to modify the olefinic polymer either by grafting monomers having polar groups onto the hydrocarbon chain, or using a so-called "adhesion promoter", i.e. a compound which gives better adhesion or bond between the filler and polymeric matrix.

For example English patents No. 1.110.930 and 1.177.200 describe reinforced compositions comprising a polyolefin, an inorganic filler and an organo-silane containing a hydrolizable group capable of reacting with the hydroxylic groups present in the inorganic filler.

Czechoslovakian patent 192.875 discloses mixtures of polyethylene and kaolin modified with an aminic silane.

U.S. patent 3.956.230 describes polymeric compositions, for example polyolefins, reinforced with a filler containing hydroxylic groups. The filler is made compatible with the polymer by carrying out the mixing in the presence of a coupling agent, such as for example maleic anhydride, and a free radical initiator.

English patent 2.225.328 describes reinforced compositions comprising polyethylene modified by the grafting of at least one acid or ethylenically unsaturated anhydride, and an aluminium silicate whose surface has been treated with a compound of the amino-silanic type.

European patent application 0.171.513 discloses reinforced compositions comprising a polyolefin, a carbonate of a metal of Group IIA of the Periodic Table and a compatibilizing agent consisting of at least one polyolefin grafted with carboxylic acids or anhydrides.

Japanese patent application 74-041-096 published on 07.11.1974 describes compositions of polyolefins with fillers obtained by reacting a polyolefin, acid or maleic anhydride and glass fibres pre-treated with an amino-silanic compound.

European patent 0.008.703 discloses the use of a bis-maleamic acid, such as for example N,N'-hexamethylene-bis-maleamic acid, N,N'-dodecamethylene-bis maleamic acid or N,N'-isophorone-bis-maleamic acid, as coupling agent capable of promoting adhesion between a polyolefin and glass fibres.

U.S. patent 4.429.064 describes the use of a maleamic acid or maleamic silane as agent for promoting the adhesion of mica to the polyolefin.

Tests carried out by the Applicant have now identified a particular type of agent for promoting adhesion between the polyolefin and filler or inorganic additive.

This type of adhesion-promoting agent is represented by a phenolic resin having the general formula (I): 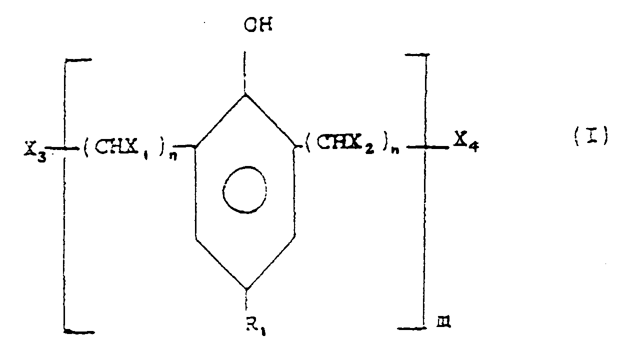
wherein:
- R₁: represents a hydrogen atom, a halogen or a hydrocarbon radical containing from 1 to 18 carbon atoms;
- X₃ and X₄: are, independently, a hydroxyl group, a hydrogen atom, or a halogen atom such as chlorine, bromine, iodine and fluorine;
- X₁ and X₂: are, independently, a hydrogen atom, an alkyl radical containing from 1 to 6 carbon atoms or a halogen atom such as chlorine, bromine, iodine and fluorine;
provided that at least one of the radicals X₁, X₂, X₃ and X₄ is a hydroxyl group or a halogen atom;
- n: is an integer between 1 and 6; and
- m: is an integer between 1 and 6.

Examples of "R₁" hydrocarbon radicals are: an alkyl or substituted alkyl radical such as methyl, ethyl, n. and iso-propyl, n. and ter. butyl, n.amyl, n.hexyl, n.octenyl, n.dodecenyl, n.octadecenyl, chloro-ethyl, hydroxy-ethyl, phenyl-ethyl, hydroxy methyl, carboxy-methyl, methoxy-carbonyl-ethyl, cyano-ethyl, etc.; an aryl or aryl substituted radical such as phenyl, chlorophenyl, bromophenyl, methylphenyl, dimethylphenyl, ethylphenyl, etc.; a benzyl radical or allyl radical.

The present invention therefore relates to a reinforced thermoplastic polyolefinic composition having an excellent balance of mechanical, physical, thermal and rheological properties, particularly suitable for the production of moulded articles having high resilience mechanical properties, especially at temperatures lower than 0°C, comprising:
(A) a polyolefin
(B) at least one carbonate of a metal of Group IIA of the Periodic Table, and
(C) a phenolic resin containing at least one hydroxyl group or halogen atom, having the above general formula (I).

In the reinforced polyolefinic compositions of the present invention, the proportions of the polyolefin (A) and carbonate (B) can vary within a wide range. The polyolefin is generally present in a quantity of between 30 and 98% by weight and, correspondingly, the carbonate in a quantity of between 70 and 2% by weight, depending on the weight of the mixture (A) + (B).
A preferred composition comprises from 50 to 80% by weight of a polyolefin (A) and, correspondingly, from 50 to 20% by weight of a carbonate of a metal of Group IIA of the Periodic Table (B). The phenolic resin containing at least one hydroxyl group or halogen atom having formula (I) defined above is present in a quantity which is at least sufficient to carry out or improve the adhesion or bond between the polyolefin and carbonate.

Generally, at least 0.01 parts by weight of the adhesion-promoting agent of formula (I) are necessary per hundred parts by weight of components (A) + (B). Particularly preferred compositions are those containing from 0.05 to 3% by weight, with respect to the mixture (A) + (B), of the phenolic resin (C) having formula (I) defined above.

Consequently, a preferred reinforced polyolefinic thermoplastic composition of the present invention comprises:
- 100 parts by weight of a mixture consisting of:
   - 50-80% by weight of a polyolefin (A), and
   - 50-20% by weight of a carbonate of a metal of Group IIA of the Periodic Table; and
- from 0.05 to 3 parts by weight of a phenolic resin (C) having general formula (I) defined above.

Phenolic resins having formula (I) above which are particularly useful in the compositions of the present invention are those wherein in formula (I) above R₁ is an alkyl radical containing from 5 to 10 carbon atoms, X₁ and X₂ is each hydrogen, X₃ and X₄ is each a hydroxyl or bromine, n is 1 and m is an integer between 4 and 8.

These phenolic resins can be prepared by the polycondensation of a hydrocarbon-substituted phenol with an aldehyde, preferably formaldehyde, in an alkaline medium, or by the polycondensation of phenol-dialcohols, such as for example 2,6-dimethylol-4-hydrocarbon-substituted phenols.

The preparation of these phenolic resins is described for example in U.S. patents 2.972.600 and 3.093.613.

Suitable phenolic resins and brominated phenolic resins are available on the market under the trade-name SP-1045, SP-1055, SP-1056, CRJ-352 of Schenectady Chemicals Inc.

Similar phenolic resins having formula (I) can also be obtained from other suppliers.

The polyolefin of the composition of the present invention can be a homopolymer of ethylene and/or a copolymer of ethylene with at least one other alpha-olefin containing from 3 to 10 carbon atoms. Examples of these alpha-olefins are propylene, butene-1, hexene-1, heptene-1, etc. When the polyolefin is a homopolymer of ethylene or one of its copolymers with lower quantities, such as for example 2.25% by weight, of at least one other C₃-C₁₀ alpha-olefin, the density of the polyolefin is within the range of 0.85 and 0.97 g/cm³ and especially between 0.940 and 0.960 g/cm³.

The Melt Flow Index of the polyolefin is generally lower than 15 g/10 min. and preferably between 2 and 10 g/10min.

Although high density polyolefins are preferred in the composition of the present invention, low density polyolefins such as low density polyethylene (LDPE) or linear low density polyethylene (LLDPE), either alone or mixed together, can be used if desired for particular applications.

These types of polyethylene are known on the market, for example, under the trade-name of ESCORENE® LL 1201 XV (LLDPE) of EXXON company; RIBLENE® AK 1912 (LDPE) of ENICHEM company; ERACLENE® HUG 6013 (HDPE) of ENICHEM company.

High density polyethylene (HDPE) is particularly preferred in the compositions of the present invention.

Any carbonate of a metal of Group IIA of the Periodic Table available on the market can be used for the preparation of the compositions of the present invention.

Specific examples of these carbonates comprise calcium carbonate, barium carbonate, magnesium carbonate or mixtures of these; calcium carbonate alone or mixed with magnesium carbonate is particularly preferred.

The particle size can be important, as is well-known in the art, and is selected according to the required properties. Generally, fine particles tend to give products with a higher shock resistance, compared to products containing larger particles, even if the rigidity decreases and more compatibility is necessary. Generally, the particle size of the carbonate of a metal of Group IIA of the Periodic Table is between 0.02 and 40 micrometers and preferably between 0.07 and 10 micrometers.

Calcium carbonate is available on the market with the trade-names OMYACARD 2 UM® of OMYA; Huber H-White® of UMBRIA MINERARIA, CALCITEC® M/2 of Mineraria Sacilese, etc.

The compositions of the present invention can be prepared by feeding the components of the composition in any order, to a suitable mixing device for the production of thermoplastic compositions and then bringing the mixture to a temperature of at least the boiling point of the polymer, such as for example between 180 and 220°C. Single-screw and twin-screw mixers, Banbury mixers and other known mixers can be used for the preparation of the blends of thermoplastic polymers.

The addition of the various components to obtain the final composition, can be carried out in any order, provided that the final composition is homogeneous.

After mixing the components, the compositions can be fed directly to the device for the production of the article, especially an injection moulding apparatus or apparatus for strip extrusion or other profiles or a blow moulding apparatus. It is generally preferable however to first form small particles, such as pellets, which are then fed to an apparatus for the production of moulded articles.

The reinforced polymeric compositions of the present invention are characterized by a high resilience (IZOD), especially at low temperatures, such as for example, at -40°C, and a high fluidity, which makes them particularly suitable for use in injection moulding. In fact, the Melt Flow Index of the compositions of the present invention is generally higher than 1.5 g/10min. at 190°C and 2.16 Kg.
The usual additives and/or auxiliary substances may also be added, if necessary, to the compositions of the present invention, to improve the thermal, oxidative and light stability characteristics, as well as other additives such as pigments, dyes, flame retardants, detaching agents, other types of thermoplastic resins or rubbers for providing anti-shock properties. These additives are generally used in quantities of between 0.1 and 40% by weight.

Some examples, which are illustrative but do not limit the present invention, are provided for a better understanding and embodiment of the present invention.

The following methods were used in the examples for measuring the characteristics of the polymer.

### Mechanical properties

The IZOD resilience with notch at +23°C and at -40°C were determined according to regulation ASTM D256, on samples having a thickness of 3.2 mm; the ultimate elongation and tensile modulus according to the procedure of regulation ASTM D638, and the flexural modulus according to the procedure of regulation ASTM D790.

### Thermal properties

The deflection temperature under a load of 0.455 MPa (HDT), was determined according to regulation ASTM D648, together with the VICAT in oil at 5 Kg, according to regulation ASTM D1525.

### Rheological properties

The Melt Flow Index (M.F.I.) was determined according to regulation ASTM D1238, at 190°C and 2.16 Kg.

### Examples 1 - 3

A blend, prepared at room temperature and consisting of:
- high density polyethylene (HDPE) having a Melt Flow Index of 2.1 g/10 min., produced and sold by the Applicant under the trade-name ERACLENE® UG 6013, in the quantity shown in Table I below;
- calcium carbonate produced and sold by Umbria Mineraria S.p.A. under the trade-name CALCITEC® M/2 in the quantity shown in Table I, and
- the phenolic resin produced and sold by Schenectady Chemicals Inc. under the trade-name of SP 1045, in the quantity shown in Table I,
was charged into a HAAKE plasticorder, equipped with a 50 ml cell and heated to a temperature of 150°C.

The mastication rate of the plasticorder was programmed according to a cycle of 50-150-50 revs per minute for 3-1-3 minutes respectively.

The blends thus obtained were ground, compression moulded at 160°C and characterized.

The characteristics of the blends obtained are shown in Table I below.

**TABLE I**

| COMPONENTS | EXAMPLES | | |
|---|---|---|---|
| | 1^{*} | 2 | 3 |
| - ERACLENE® UG 6013 (Kg) | 70 | 70 | 70 |
| - CALCITEC® M/2 (Kg) | 30 | 30 | 30 |
| - RESIN SP 1045 (Kg) | -- | 0.5 | 1 |

| MECHANICAL PROPERTIES | | | |
|---|---|---|---|
| - IZOD at + 23° C (J/m) | 38 | 252 | 241 |
| - IZOD at - 40° C (J/m) | 36 | 70 | 60 |

| THERMAL PROPERTIES | | | |
|---|---|---|---|
| - VICAT at 5 kg in oil (°C) | 81 | 76 | 74 |

| RHEOLOGICAL PROPERTIES | | | |
|---|---|---|---|
| - M.F.I. (g/10 min) | 1.5 | 1.6 | 1.8 |

| | | | |
|---|---|---|---|
| * Comparative example | | | |

### Examples 4 - 6

The following products were charged into a dry-blend mixer:
- high density polyethylene (HDPE) having a Melt Flow Index of 2.1 g/10 min., produced and sold by the Applicant under the trade-name ERACLENE HUG 6013, in the quantity shown in Table II;
- calcium carbonate, produced and sold by Umbria Mineraria S.p.A. under the trade-name CALCITEC® - M/2, in the quantity shown in Table II and,
- the phenolic resin produced and sold by Schenectady Chemicals Inc. under the trade-name SP 1045, in the quantity shown in Table II.

The resulting mixtures were slowly mixed for 15 minutes and subsequently extruded in a San Giorgio MC-33 twin-screw extruder, at a temperature of 220°C and at 150 rpm.

The extruded products were injection moulded using a Battenfeld 750 press under the following conditions:

| | |
|---|---|
| Temperature of cylinder and nozzle: | 200°C; |
| Mould temperature: | 70°C |
| Injection time: | 20 sec.; |
| Total cycle time: | 45 sec. |

The characteristics of the moulded products obtained are shown in Table II below:

**TABLE II**

| COMPONENTS | EXAMPLES | | |
|---|---|---|---|
| | 4^{*} | 5 | 6 |
| - ERACLENE® UG 6013 (Kg) | 70 | 70 | 70 |
| - CALCITEC® M/2 (Kg) | 30 | 30 | 30 |
| - PHENOLIC RESIN SP 1045 (Kg) | -- | 0.5 | 1 |

| MECHANICAL PROPERTIES | | | |
|---|---|---|---|
| - IZOD at + 23° C (J/m) | 40 | 391 | 396 |
| - IZOD at - 40° C (J/m) | 36 | 67 | 62 |
| - Ultimate elongation (%) | 186 | 304 | 424 |
| - Tensile modulus (MPa) | 1900 | 1800 | 1800 |
| - Flexural modulus (MPa) | 1900 | 1700 | 1800 |

| THERMAL PROPERTIES | | | |
|---|---|---|---|
| - HDT at 0.455 MPa (°C) | 111 | 106 | 106 |
| - VICAT at 5 kg in oil (°C) | 83 | 81 | 1.8 |

| RHEOLOGICAL PROPERTIES | | | |
|---|---|---|---|
| - M.F.I. (g/10 min) | 1.1 | 1.7 | 1.8 |

| | | | |
|---|---|---|---|
| * Comparative example | | | |

## Claims

1. Reinforced thermoplastic polyolefin composition having an excellent balance of mechanical, physical, thermal and rheological properties, particularly suitable for the production of moulded articles having high resilience mechanical properties, especially at temperatures lower than 0°C, comprising:
(A) a polyolefin
(B) at least one carbonate of a metal of Group IIA of the Periodic Table, and
(C) a phenolic resin containing at least one hydroxyl group or halogen atom, having the general formula: 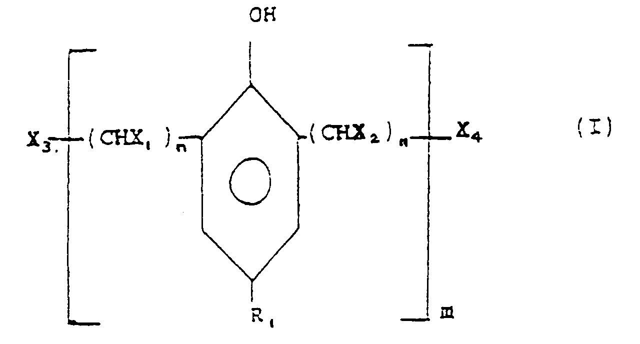
wherein
R₁ represents a hydrogen atom, a halogen or a hydrocarbon radical containing from 1 to 18 carbon atoms;
X₃ and X₄ are, independently, a hydroxyl group, a hydrogen atom, or a halogen atom such as chlorine, bromine, iodine and fluorine;
X₁ and X₂ are, independently, a hydrogen atom, an alkyl radical containing from 1 to 6 carbon atoms or a halogen atom such as chlorine, bromine, iodine and fluorine;
provided that at least one of the radicals X₁, X₂, X₃ and X₄ is a hydroxyl group or a halogen atom;
n is an integer between 1 and 6; and
m is an integer between 1 and 6.

2. Thermoplastic polyolefin composition according to claim 1, wherein the quantity of polyolefin (A) is between 30 and 98% by weight and, correspondingly, that of the carbonate (B) is between 70 and 2% by weight, depending on the weight of the mixture (A) + (B).

3. Thermoplastic polyolefin composition according to claims 1 or 2, wherein the quantity of phenolic resin containing at least one hydroxyl group or halogen atom having formula (I) defined above is at least 0.01 parts by weight per hundred parts by weight of components (A) + (B).

4. Thermoplastic polyolefin composition according to any of the previous claims comprising:
- 100 parts by weight of a mixture consisting of:
- 50-80% by weight of a polyolefin (A), and
- 50-20% by weight of a carbonate of a metal of Group IIA of the Periodic Table; and
- from 0.05 to 3 parts by weight of a phenolic resin (C) having general formula (I) defined above.

5. Thermoplastic polyolefin composition according to any of the previous claims, wherein the radical R₁ is selected from an alkyl or substituted alkyl; an aryl or substituted aryl; a benzyl, and an allyl.

6. Thermoplastic polyolefin compositions according to any of the previous claims, wherein R₁ is an alkyl radical containing from 5 to 10 carbon atoms, X₁ and X₂ is each hydrogen and X₃ and X₄ is each a hydroxyl or bromine, n is 1 and , is an integer between 4 and 8.

7. Thermoplastic polyolefin composition according to any of the previous claims, wherein the polyolefin is selected from a homopolymer of ethylene, a copolymer of ethylene with at least another alpha-olefin containing from 3 to 10 carbon atoms and their mixtures.

8. Thermoplastic polyolefin composition according to claim 7, wherein the polyolefin is a homopolymer of ethylene or a copolymer of ethylene with 2-25% by weight of at least another alpha-olefin containing from 3 to 10 carbon atoms having a density of between 0.85 and 0.97 g/cm³ and a Melt Flow Index lower than 15 g/10 min.

9. Thermoplastic polyolefin composition according to claims 7 or 8, wherein the polyolefin has a density of between 0.940 and 0.960 g/cm³ and a Melt Flow Index of between 2 and 10 g/10 min.

10. Thermoplastic polyolefin composition according to any of the previous claims, wherein the carbonate of a metal of Group IIA of the Periodic Table (B) is in the form of particles having dimensions of between 0.02 and 40 micrometres and preferably between 0.07 and 10 micrometres.

11. Thermoplastic polyolefin composition according to any of the previous claims, containing in addition additives and/or auxiliary substances to improve its characteristics of thermal, oxidative and light stability, and other additives such as pigments, dyes, flame retardants, detaching agents, other types of thermoplastic resins or rubbers for providing antishock properties, in quantities of between 0.1 and 50% by weight.
